# EUROPEAN PATENT SPECIFICATION

(11) **EP 1 636 088 B1**
(45) Date of publication and mention of the grant of the patent: **02.04.2008**
(21) Application number: 04756031.3
(22) Date of filing: 23.06.2004
(51) Int. Cl.: B64D 17/02, B32B 27/12

(54) **PARACHUTE WITH REINFORCING MATERIAL**
FALLSCHIRM MIT VERSTÄRKUNGSMATERIAL
PARACHUTE AVEC MATERIAU DE RENFORCEMENT

(30) Priority: 26.06.2003 US 482646 P
(43) Date of publication of application: 22.03.2006
(73) Proprietor: Atair Aerospace, Inc., Brooklyn, NY 11231 (US)
(72) Inventor: PRESTON, Daniel, Kew Gardens, NY 11435 (US)
(74) Representative: Copp, David Christopher
(86) International application number: PCT/US2004/020288
(87) International publication number: WO 2005/002964

(56) References cited:
- GB-A- 1 305 676
- US-A- 5 333 568
- US-A- 5 470 632
- US-A- 6 080 690

## Description

### PRIORITY

The present application claims priority under 35 U.S.C. §119(e) to U.S. provisional patent application no. 60/482,646, filed June 26, 2003.

### BACKGROUND OF THE INVENTION

### Field of the Invention

The present invention relates to construction of parafoils and parachutes. More particularly, it relates to use of a composite, non-woven material for parafoils and parachutes and methods of reinforcing such devices using such material as a reinforcing tape.

### Background

Parachutes, both decelerator type and ram-air, gliding wing type, are typically constructed from rip-stop nylon fabric. Rip-stop nylon is a square woven fabric, with the warp and weft fibers being positioned at 90 degrees to each other. The material is then typically treated with a silicone based chemical and calanderized to fill in the pores of the fabric to reduce its porosity and control air flow through the fabric. The treatment causes the fabric to become slick and non-stick.

The material as used in parachutes, must have various qualities, such as:
- good tear strength (even after many hours exposed to Ultra Violet rays (UV);
- low permeability to keep the cells pressurized;
- light weight for better inflation; and
- reduced packing volume.

Rip-stop nylon has advantages in weight, tear strength and longevity. The chemical make up of coatings and how they are applied to the fabric also affect the qualities of the final product.

Parachutes are designed to have a specific form during flight and is constructed from various panels which are shaped and put together to achieve the desired form. However, during flight, the fabric is subjected to complex mechanical and aerodynamics stresses which stress the fabric along the direction of its laid fibers, and in various patterns at a bias to the weave. As such, the actual shape of the assembled panels and the resulting inflated structure during flight, distort away from the desired modeled shape.

To combat this problem, the construction of a parafoil or parachute generally includes heavy narrow woven fabric tapes (or webbing) that is stitched into the structure to restrain the fabric panels into a shape closer to that modeled. However, the inclusion of reinforcing tape in the design adds packing volume and construction complexity.

Other problems with woven fabric reinforcing tapes include: inherent stretchability in various directions (the degree of stretch depends on the fiber, type of weave, and the directions of the stresses) and shrinking from exposure to water and abrasion from absorbed particles and mildew.

The construction of parafoils and parachutes with rip-stop nylon panels and reinforcing tapes as disclosed for example in GB-1305676, which shows all the features of the preamble of claim 1, is also subject to construction tolerance errors by the nature of the sewing construction process. Specifically, due to the slick coating material, and the low tolerances in the design of parachute, highly skilled workers are required to construct a parachute. Even with highly skilled labor, the parachute is subject to inaccuracies during construction. For example, since the seams are tensioned by the sewing process and shrink, the accuracy of the constructed shape with respect to the design is limited.

For example, a common seam in a parachute involves three overlaying fabric panel edges plus a reinforcing tape. The reinforcing tape is rolled over and stitched over the entire length with a double needle lockstitch. It is extremely difficult to hold tolerances of several millimeters on match marks during this sewing process. Moreover, accumulative errors along a span of an average personnel parachute can amount to several inches. Thus, even before additional distortions are created due to stresses on the fabric, the parachute shape may vary from the design.

It is also difficult to test parachute designs or to obtain accurate data relating to parachute performance during flight, such as pressure distributions, air flows, and material shape, movement and stress. Obtaining such information has been attempted using wind tunnels. However, only two wind tunnels exist in the United States which are large enough for small to medium sized parachutes. Also, wind tunnels cannot provide accurate information regarding actual flights. The conditions in an wind tunnel are perfect and constant and do not necessarily reflect conditions during flight.

### SUMMARY OF THE INVENTION

Embodiments of the present invention address the problems outlined above and present a strong, flexible material to keep a parafoil or parachute more in accordance with its intended design.

According to the invention, there is provided a parachute having a canopy comprising a plurality of panels affixed together, a plurality of suspension lines for suspending a payload from the canopy, and reinforcing tape fixed to the canopy at predetermined locations, characterised in that said reinforcing tape comprises a lower film, an upper film and a plurality of layers of mono-filaments provided therebetween and in that at least one sensor is laminated between said upper and said lower film of said reinforcing tape.

The reinforcing tape may be affixed to one or more seams established by the assembly of the plurality of panels, and may include one or more electrical wires for conducting electrical signals.

The suspension lines may also include a laminate of mono-filaments encapsulated by at least one layer of plastic.

In some embodiments of the present invention, a flexible composite fabric is used for construction of parafoils or parachutes, and in particular, the flexible composite fabric is used as a reinforcing tape for parafoils and parachutes. The composite fabric may be formed of thin sheets of plastic or polyester film and fibers of a high strength material (e.g., ultra high molecular weight polyethylene). Such a material may include those materials disclosed in U.S. patent no. 5,333,568 and U.S. patent no. 5,470,632

The high strength fibers may be placed in the material to control the strength and resistance to stretch of the reinforcing tapes made from such composite materials. In some embodiments, this allows the parachute shape to be better maintained in a desired shape during flight.

Reinforcing tapes according to embodiments of the present invention may be differentiated from woven tapes in that fiber reinforced plastic tapes, or fiber reinforced or unreinforced laminate tapes have little to no "crimp". Thus, reinforcing tapes according to the present invention (i.e., composite tapes) stretch significantly less than woven tapes, are more dimensionally stable, and are inherently sealed and waterproof, for example.

In another embodiment, a method for constructing a parachute may include forming a plurality of parachute panels of a first material and affixing the plurality of parachute panels together in a predetermined manner. The plurality of joints may be formed at the junctures between affixed panels.

### BRIEF DESCRIPTION OF THE DRAWINGS

Fig. 1 illustrates a top view of a typical design for construction of a ram-air parachute.
Fig. 2 illustrates a cross-sectional, side view of the ram-air parachute of Fig. 1.
Fig. 3 illustrates a front view of the ram-air parachute shown in Figs. 1 and 2.
Figs. 4A-4E illustrate the resulting shapes in flight of various rib constructions due to stresses.

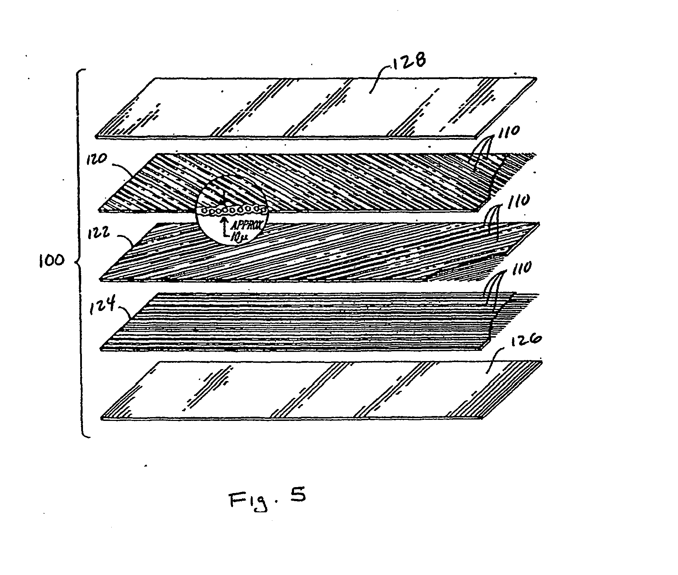

Fig. 5 is an exploded view of a composite material according to an embodiment of the present invention.

### DETAILED DESCRIPTION OF SOME OF THE EMBODIMENTS

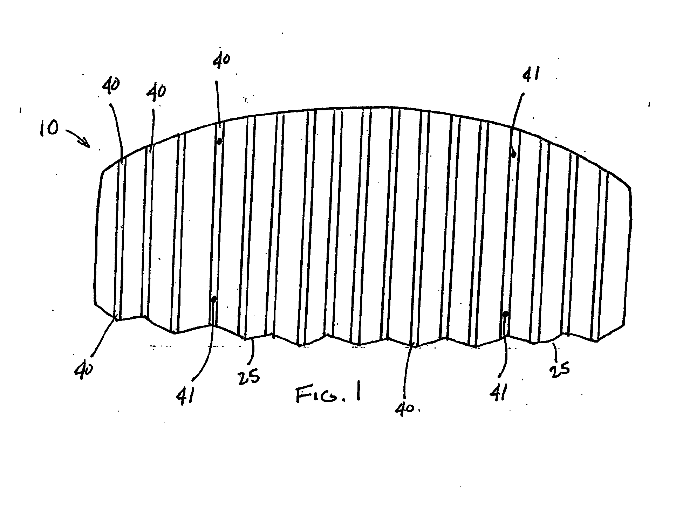

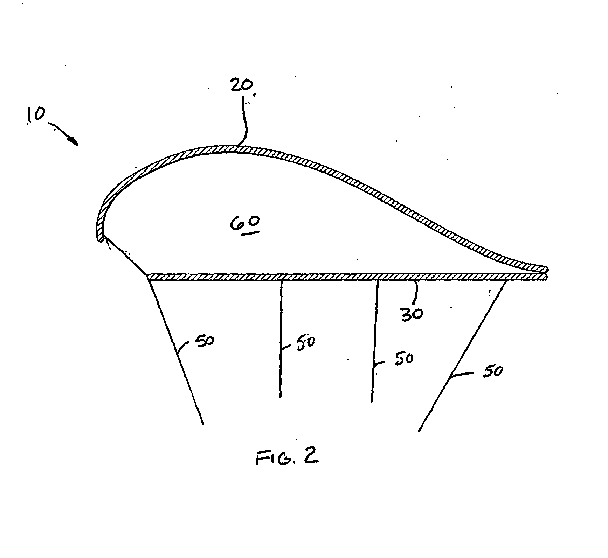

Figs. 1-3 illustrate a canopy of a typical ram air parachute 10. The ram air parachute 10 includes a top skin 20 and bottom skin 30. A plurality of vertical ribs 60 are formed between the top skin 20 and the bottom skin 30 forming a plurality of cells 70. Suspension lines 50 may be attached to at least some or all of the plurality of ribs. Generally, suspension lines are attached to every other rib in the ram air parachute. The suspension lines may be connected together to provide proper suspension of the user/cargo below the canopy and maintain the structure and the orientation of the canopy with respect to the pilot/cargo. In order to protect edges and prevent stretch, reinforcing tapes are sewn with one or more seams, and preferably, all seams. Additionally, reinforcing tape 40 may be placed at the seams of the canopy panels, along open edges 25 of the parachute, and at the inlets 35 in the front of the parachute, and may also be sewn onto the ribs of the parachute to help maintain their shape (since most parachutes are designed to have a specific shape for flight though the air).

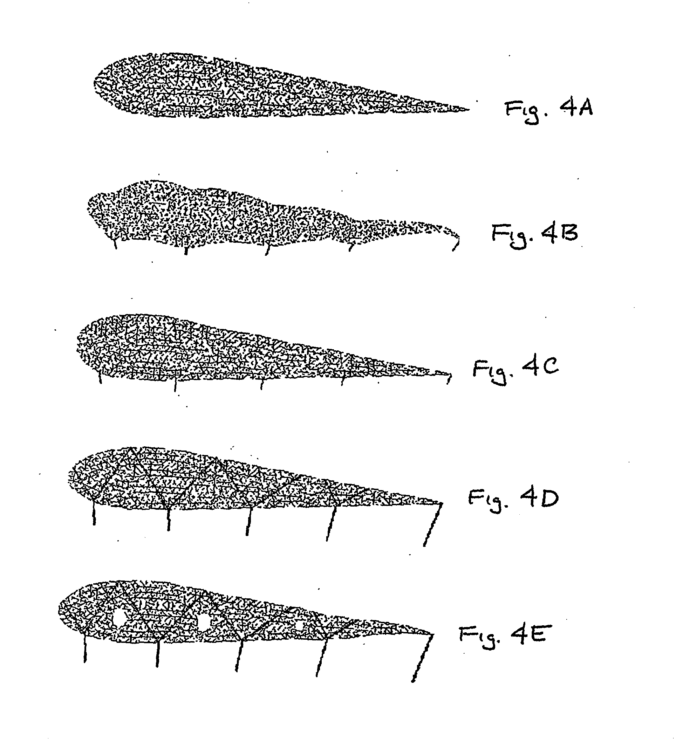

Distortions in shape greatly affect the flight characteristics of the parachute. Figs.4A-E illustrate the shape distortions on a parachute rib. Fig. 4A represents the desired rib shape. Due to the stresses, an un-reinforced rib would have the shape illustrated in Fig. 4B, which differs significantly from the desired shape. However, by changing the way a rib is cut, for example, the in-flight shape may be improved. To that end, Fig. 4C illustrates the shape of an un-reinforced rib that has been cut so that the warp is 45° to the cord of the rib. This results in a significant improvement in shape, but still has some distortions around the shroud attachment points.

With prior art reinforcing tapes attached to the rib in a triangular pattern, the in-flight shape of the parachute is further improved, as illustrated in Fig. 4D. Finally, by using a reinforcing tape material according to embodiments of the present invention, the in-flight shape is closer yet to the desired shape (see Fig. 4E).

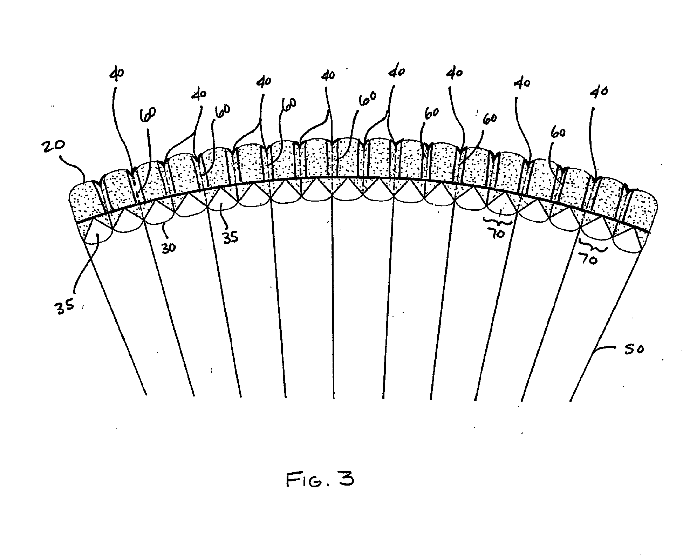

According to the present invention, a flexible composite fabric is used for at least some of the reinforcing tape applications on a parachute, and in some embodiments, is used preferably for all the reinforcing tape applications on a parachute. A reinforced material 100 used in such embodiments is illustrated in n in Fig. 3 (exploded view). Fibers 110 of a high strength material are laid, in layers 120, 122 and 124 on an extremely thin film (e.g., a sheet of plastic) 126. The material may be plastic, e.g., a polyester film, Mylar^{®}, or other similar material. The fibers 110 may be of spectra^{®}, Kevlar^{®}, HMA, carbon fiber or other high strength material having properties to any one or more of the foregoing. A second sheet of material (e.g., sheet of plastic, which may be similar to 126) 128 may be placed on top of the fibers, and then the entire structure may be fused together using heat and/or pressure.

Such a material is described in U.S. Patent No. 5,333,568 entitled, "Material for the Fabrication of Sails" and U.S. Patent No. 5,470,632 entitled "Composite Material for Fabrication of Sails and Other Articles". The material 100 may be constructed using unidirectional layers ("uni-tapes") 120,122 and 124, each having extruded monofilaments, for example, in a pultruded tape, located between an upper film 128 and a lower film 126, with each uni-tape having an approximate thickness of 10 microns, for example. The thickness typically may be between 5 micron and 100 microns, more preferable between 5 microns and 25 microns, and most preferable between 7 microns and 15 microns. Each uni-tape may be provided with 50 to 85 percent monofilaments by volume with the monofilaments being provided' with a carrier of bonding resin which forms a matrix that includes monofilaments and resin. Each of the uni-tapes may include longitudinal monofilaments 110 which extend from one edge of the completed uni-tape to the other in a single direction. The uni-tapes may be placed in different directions in each layer so that the fibers may be positioned along different paths. The resulting sheet is a non-woven flexible composite fabric which is considerably lighter, thinner and stronger than rip-stop nylon. Additionally the strength and resistance to stretch is designed into the fabric. Moreover, the reinforcing tapes according to embodiments of the present invention may be manufactured via a modified batch process - resulting in a continuous reel to reel process.

The laminated fabric may then be cut into narrow strips to be used as reinforcement tapes on a parachute. Such laminated fiber tapes, according to some embodiments, may exhibit zero or near zero stretch or shrink, may be waterproof, and may not absorb little to any water, particles or mildew. Additionally, they are stronger and have less weight and volume, allowing a reduction in pack volume of deployable parachutes and parafoils.

Additionally, the use of the composite material for reinforcement tapes allows improved experimentation with fibers for parachute uses. The woven webbing tapes used on parachutes are typically produced on extremely high volume machines, and the industry has not been able to make use of major developments of stronger lighter fibers because it can not justify the expense of large minimum setup runs. However, with the laminated fiber approach, according to embodiments of the present invention, small batch runs may be produced, which are economical and allow new fibers or mixtures of new fibers, for example, and experimentation to take place. Additionally multiple fiber types can be mixed and fiber direction controlled in ways not possible with woven fabrics.

Laminated tapes may also be used as parachute lines. Specifically, some embodiment so of the present invention allow flat ribbons with encapsulated thin fibers to be used or a single encapsulated braided fiber strand.

Furthermore, using laminated composite construction for reinforcement tapes or parachute lines enables wires, circuitry and other sensors 41 to be easily integrated into the structure of the parachute. For example, fiber optic strain gauges, wires and small electronic circuits and sensors can be laid into the laminate and fused in during formation of the material. Alternatively, since bonding is possible with the material, gauges, wires, circuitry or sensors can be bonded to the material after formation. Accordingly, sensors in the tapes or lines can be used to study stresses, monitor parachute deployment, or determine the condition and need for replace of parachute parts.

Having now described a few embodiments of the invention, it should be apparent to those skilled in the art that the foregoing is merely illustrative and not limiting, having been presented by way of example only. Numerous modifications and other embodiments are within the scope of ordinary skill in the art and are contemplated as falling within the scope of the invention.

## Claims

1. A parachute having a canopy (10, 20, 30) comprising a plurality of panels affixed together, a plurality of suspension lines (50) for suspending a payload from the canopy, and reinforcing tape (40) fixed to the canopy at predetermined locations,
**characterised in that** said reinforcing tape comprises a lower film (126), an upper film (128) and a plurality of layers of mono-filaments (110) provided therebetween and **in that** at least one sensor (41) is laminated between said upper and said lower film of said reinforcing tape.

2. A parachute as claimed in Claim 1, **characterised in that** the reinforcing tape (40) is affixed to one or more seams established by the assembly of the plurality of panels.

3. A parachute as claimed in Claim 1 or Claim 2, **characterised in that** the reinforcing tape (40) includes one or more electrical wires for conducting electrical signals.

4. A parachute as claimed in any preceding claim, wherein the suspension lines (50) include a laminate of mono-filaments (110) encapsulated by at least one layer of plastic (126, 128).

5. A parachute as claimed in Claim 4 further including at least one sensor (41) encapsulated by said at least one layer of plastic (126, 128).

## Patentansprüche

1. Fallschirm mit einer Fallschirmkappe (10, 20, 30), die eine Mehrzahl von miteinander befestigten Bahnen, eine Mehrzahl von Aufhängeleinen (50) zum Aufhängen eines Ladegewichts an die Fallschirmkappe und Verstärkungsband (40) aufweist, das an der Fallschirmkappe an vorher festgelegten Stellen fixiert ist, **dadurch gekennzeichnet, dass** das Verstärkungsband eine untere Schicht (126), eine obere Schicht (128) und eine Mehrzahl von dazwischen vorgesehenen Lagen von Einzelfasern (110) aufweist und dass mindestens ein Sensor (41) zwischen der oberen und der unteren Schicht des Verstärkungsbandes geschichtet ist.

2. Fallschirm nach Anspruch 1, **dadurch gekennzeichnet, dass** das Verstärkungsband (40) an einer Naht oder mehreren Nähten befestigt ist, die durch das Zusammenfügen der Mehrzahl von Bahnen gebildet ist oder sind.

3. Fallschirm nach Anspruch 1 oder Anspruch 2, **dadurch gekennzeichnet, dass** das Verstärkungsband (40) ein elektrisches oder mehrere elektrische Kabel zur Leitung elektrischer Signale beinhaltet.

4. Fallschirm nach einem der vorangegangenen Ansprüche, wobei die Aufhängeleinen (50) ein Laminat von Einzelfasern (110) beinhalten, das von mindestens einer Kunststofflage (126, 128) umschlossen ist.

5. Fallschirm nach Anspruch 4, der weiterhin mindestens einen Sensor (41) beinhaltet, der von der mindestens einen Kunststofflage (126, 128) umschlossen ist.

## Revendications

1. Parachute avec une voilure (10, 20, 30) comprenant une pluralité de panneaux fixés ensemble, une pluralité de cordes de suspension (50) pour accrocher une charge utile à la voilure ; et un ruban de renforcement (40) fixé sur la voilure à des emplacements prédéterminés,
**caractérisé en ce que** ledit ruban de renforcement comprend un film inférieur (126), un film supérieur (128) et une pluralité de couches de mono-filaments (110) disposés entre ceux-ci et **en ce qu'**au moins un capteur (41) est stratifié entre ledit film supérieur et ledit film inférieur dudit ruban de renforcement.

2. Parachute selon la revendication 1, **caractérisé en ce que** le ruban de renforcement (40) est fixé sur une ou plusieurs coutures établies par l'ensemble de la pluralité de panneaux.

3. Parachute selon la revendication 1 ou la revendication 2, **caractérisé en ce que** le ruban de renforcement (40) comprend un ou plusieurs fils électriques pour conduire des signaux électriques.

4. Parachute selon l'une quelconque des revendications précédentes, dans lequel les cordes de suspension comprennent un stratifié de mono-filaments (110) enrobés dans au moins une couche de plastique (126,128).

5. Parachute selon la revendication 4, comprenant de plus au moins un capteur (41) enrobé dans au moins une couche de plastique (126, 128).
